# FASCICULE DE BREVET EUROPEEN

(11) **EP 3 426 999 B1**
(45) Date de publication et mention de la délivrance du brevet: **07.04.2021**
(21) Numéro de dépôt: 17715219.6
(22) Date de dépôt: 09.03.2017
(51) Int. Cl.: B60H 1/00, F28D 20/02, B60R 13/02

(54) **VÉHICULE À HABITACLE ISOLÉ PAR UNE BARRIÈRE THERMIQUE**
FAHRZEUG, DESSEN KABINE DURCH EINE WÄRMEBARRIERE ISOLIERT IST
VEHICLE THE CABIN OF WHICH IS INSULATED BY A THERMAL BARRIER

(30) Priorité: 11.03.2016 FR 1652070
(43) Date de publication de la demande: 16.01.2019
(73) Titulaire: Hutchinson, 75008 Paris (FR)
(72) Inventeur: CHOPARD, Fabrice, 38400 SAINT MARTIN D'HERES (FR); HUILLET, Cédric, 45200 MONTARGIS (FR); GEFFRAY, Fanny, 35000 RENNES (FR); LEBORGNE, Mathieu, 74500 Evian Les Bains (FR)
(74) Mandataire: Ernest Gutmann - Yves Plasseraud S.A.S.
(86) Numéro de dépôt international: PCT/FR2017/050540
(87) Numéro de publication internationale: WO 2017/153693

(56) Documents cités:
- CN-U- 201 961 258
- CN-U- 202 200 918
- DE-A1-102014 209 673
- JP-A- H10 151 997

## Description

La présente invention concerne le domaine de la gestion thermique. Le document DE10 2014 209 673 A1 montre un véhicule avec une couche isolante et une couche contenant du matériau MCP.

Est concerné en particulier un véhicule comprenant un habitacle limité par des parois interposées entre l'habitacle et un environnement extérieur et des moyens de conditionnement d'air adaptés à temporairement chauffer, refroidir et projeter de l'air dans l'habitacle.

Un procédé de gestion thermique de l'atmosphère de l'habitacle est aussi visé.

De fait, on conçoit que pour assurer la gestion thermique d'un habitacle de véhicule, il puisse être utile tant de pouvoir isoler de l'environnement extérieur le volume de l'habitacle, et même plus finement :
- d'y gérer la température à l'intérieur de marges opérationnelles,
- de retarder (voire dans certains cas de favoriser) la propagation d'un flux thermique depuis ce volume vers l'extérieur, voir l'inverse.

C'est dans ce contexte qu'il est ici proposé notamment un procédé de gestion thermique de l'atmosphère de cet habitacle, dans lequel :
- on pourvoit une partie au moins des parois, de l'intérieur où est situé l'habitacle, vers l'extérieur :
   -- d'une barrière thermique intérieure contenant au moins un matériau MCP en échange thermique avec l'air de l'habitacle et ayant une température de changement d'états entre liquide et solide comprise entre 15°C et 40°C, et de préférence entre 17°C et 35°C,
   -- et d'au moins un élément isolant thermique,
- le véhicule étant placé dans un environnement où le matériau MCP est dans l'état solide, et l'air de l'habitacle s'échauffant jusqu'à plus de 20°C, on laisse ledit au moins un matériau MCP stocker de l'énergie thermique en se liquéfiant par échange thermique avec cet air,
- puis, si la température de l'habitacle est jugée trop élevée, on fait arriver apporte temporairement dans l'habitacle, en échange thermique avec ledit au moins un matériau MCP, de l'air conditionné frais issu de moyens de conditionnement d'air, de sorte que l'air conditionné frais arrivant entraine une solidification dudit au moins un matériau MCP.

Combiner ainsi une telle barrière et un isolant thermique a d'autant plus son sens dans un habitacle de véhicule que la gestion thermique y est délicate puisque la température peut y varier notablement et que son environnement extérieur est difficile, avec des gradients de température pouvant atteindre plusieurs dizaines de °C.

Le matériau isolant permettra de limiter les échanges thermiques entre intérieur et extérieur.

Un matériau MCP permettra notamment, par échange thermique et changements d'états :
- s'il agit en barrière thermique sélective, de ralentir la propagation d'un front chaud ou froid, en changeant d'état,
- s'il agit en moyen de stockage thermique autonome, d'emmagasiner une énergie thermique pour la restituer plus tard, à une structure et/ou à un fluide avec lequel il sera en contact.

Le premier cas pourra être considéré comme à privilégier, dans une situation visant à favoriser la sensation, par l'occupant de l'habitacle, d'un confort perçu comme rapidement atteint, par exemple quand il lance un conditionnement de l'habitacle par de l'air conditionné, alors qu'en pénétrant dans cet habitacle il a ressenti une sensation de chaleur excessive.

Un but visé est aussi de limiter la consommation énergétique du véhicule liée au conditionnement de l'habitacle. L'objet est atteint par un véhicule selon la revendication 1 et un procédé selon la revendication 13.

Avec la solution qui précède, on devrait pouvoir souffler de l'air conditionné à une température par exemple moins basse dans la situation ci-dessus que ce qui est requis quand un tel complexe barrière thermique intérieure/ élément isolant thermique n'est pas présent.

Un écart de 1-2°C parait atteignable.

Et ceci devrait être d'autant plus réalisable si on utilise comme barrière thermique intérieure un élément où ledit au moins un matériau MCP est dans une matrice poreuse, à pores ouverts, de sorte que ladite solidification entraine une diminution de la conductivité thermique dudit élément.

En effet, si de l'énergie thermique de régulation de la température de l'habitacle est apportée par les moyens de conditionnement d'air, et qu'on diminue par ailleurs cette conductivité thermique, donc a priori celle de la barrière thermique intérieure, laquelle est doublée par l'isolant thermique, on doit pouvoir limiter les déperditions d'énergie et donc faire que l'occupant de l'habitacle ressente plus rapidement la sensation de confort à laquelle il aspire et/ou avoir à moins conditionner l'air, en chaud ou froid, pour le même effet ressenti.

Et placer la(les) température(s) de changement(s) d'états du(des) MCP de préférence entre 17°C et 35°C favorisera alors leur passage à l'état liquide, dès qu'on atteint une température souvent jugée comme celle minimum « de confort » (17°C), un état liquide à température notablement plus haute, telle que à ou au-dessus de 35°C, favorisant la présence de MCP solide(s) pour des températures inférieures ou égales à 35°C.

En termes d'équipement d'un véhicule, ce qui précède pourra se traduire de sorte que la/les paroi(s) interposée(s) donc entre l'habitacle et l'environnement extérieur du véhicule soit pourvue au moins en partie, de l'intérieur où est situé l'habitacle, vers l'extérieur :
- d'une barrière thermique contenant au moins un matériau MCP ayant une température de changement d'états entre liquide et solide comprise entre 15°C et 40°C, et de préférence entre 17°C et 35°C, et en échange thermique avec l'air de l'habitacle au moins en partie issu des moyens de conditionnement d'air,
- et d'au moins un élément isolant thermique.

Dans cette situation, on a noté ci-avant l'intérêt qu'il pourrait y avoir que à ce que la barrière thermique intérieure comprenne une matrice poreuse ayant des pores ouverts qui varient en fonction de l'état liquide ou solide du matériau MCP, faisant ainsi varier la conductivité thermique.

Utiliser, pour cette barrière thermique intérieure, une mousse expansive chargée en MCP(s) (libre(s) ou non vis-à-vis du réseau de la mousse) permettra de favoriser l'atteinte de la situation évoquée ci-avant où la solidification du(des) MCP entraine une diminution favorable de la conductivité thermique de l'élément qui le(s) contient.

En pratique, il est à cet égard proposé que la barrière thermique présente un rapport de conductivité thermique entre la situation où le(s) matériau(x) MCP sont totalement solides et la situation où le(s) matériau(x) MCP sont totalement liquides compris entre plus de 1 et 10 (à 20% près).

Ceci est atteignable avec une mousse expansive chargée en MCP pur ou par un ensemble de capsules déformables ou chacune à volume variable, non rigides donc, qui peuvent être en élastomère, contenant du/des MCP, libre(s) ou lié(s) à la mousse par réticulation ou adhésion, par exemple.

Pour favoriser l'effet de contraction/dilatation au sein de la barrière thermique, le(s) MCP(s) de la barrière thermique intérieure sera(seront) encapsulé(s) et définira(ront) une charge volumique pouvant atteindre :
- 85% du volume de la mousse et desdites capsules, lorsque le matériau MCP est à l'état solide, cristallisé,
- et/ou 95% du volume de la mousse et des capsules lorsque le MCP est à l'état liquide.

Une charge volumique comprise respectivement entre 45 et 85% et 55 et 95% sera optimale, car en-dessous la proportion rend l'effet trop incertain et au-delà il peut survenir un manque de place si les limites extérieures sont imposées (la mousse est contrainte dans un environnement rigide).

Pour la performance de cette isolation et un rapport efficacité/poids favorable, il est aussi conseillé que l'élément isolant thermique contienne un matériau poreux, et de préférence nano-poreux.

Et encore à cette fin et/ou à des fins potentiellement mécaniques, il est par ailleurs recommandé que ledit élément isolant thermique soit disposé dans une (ou une série d') enveloppe(s) sous vide, pour définir au moins un panneau isolant sous vide, PIV. Ce pourra aussi être utilement le cas pour la barrière thermique.

Pour favoriser l'efficacité thermique globale, il est aussi conseillé que la ou chaque température de changement d'états du(des) matériau(x) MCP soi(en)t (au moins pour certaines) supérieure(s) ou égale à la plus haute température de refroidissement et d'entrée d'air dans l'habitacle des moyens de conditionnement d'air, voire, supérieure(s) ou égale à la plus basse température de chauffage et d'entrée d'air de ces mêmes moyens.

Si un seul matériau MCP est utilisé, une température de changement d'états entre 20 et 25°C, voire 30-35°C, donc à une température assez élevée, permettra (lorsque le véhicule est en circulation) de le conserver facilement solide l'été dans de très nombreux cas, avec alors une faible conductivité thermique de la barrière, de même l'hiver dans de nombreux cas de chauffage conditionné de l'habitacle.

Pour favoriser une fabrication relativement simple et facile à mettre en œuvre, il est par ailleurs conseillé, si plusieurs matériaux MCP ayant des températures de changement d'état différentes sont à utiliser, que ceux-ci soient dispersés dans une matrice support.

Ainsi on n'aura notamment pas à distribuer les MCPS en sous-couches successives.

Par ailleurs, dans le cas où plusieurs matériaux MCP seront utilisés dans la barrière thermique intérieure, on pourra trouver approprié qu'ils comprennent au moins :
- un premier matériau MCP ayant une température de changement d'état comprise entre 17°C et 25°C, et
- un second matériau MCP ayant une température de changement d'état comprise entre 25°C et 40°C.

Ainsi, le premier sera liquide dans la gamme des températures de confort, et le second solide dans la grande majorité des cas, tant en hiver qu'en été, en régions tempérées.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 schématise une partie de véhicule ayant un habitacle dont au moins une paroi extérieure est pourvue du dispositif de gestion thermique ici imaginé,
- les figures 2 et 3 schématisent en coupe verticale une telle paroi dans deux versions possibles,
- et les figures 4 et 5 schématisent en coupe verticale une paroi conforme à l'invention, dans différentes situations opérationnelles.

A toute fin, il est à cette étape par ailleurs confirmé qu'un matériau à changement de phase - ou MCP ; PCM en anglais - désigne un matériau capable de changer d'état physique, entre liquide et solide, dans une plage de température restreinte comprise entre -50°C et 50°C. Le transfert de chaleur (ou transfert thermique) peut s'opérer par utilisation de sa Chaleur Latente (CL) : le matériau peut alors stocker ou céder de l'énergie par simple changement d'état, tout en conservant une température sensiblement constante, celle du changement d'état.

Le(s) matériau(x) thermiquement isolant(s) associé(s) au(x) MCP pourra(ont) être un isolant « simple » comme de la laine de verre, mais on préfèrera certainement une mousse, par exemple de polyuréthane ou de polyisocyanurate, ou encore plus favorablement un matériau isolant thermique poreux, voire nano-poreux, disposé dans une enveloppe sous vide, pour définir au moins un panneau isolant sous vide, PIV.

Par « PIV », on entend une structure soit remplie par un gaz ayant une conductivité thermique inférieure à celle de l'air ambiant (26mW/m.K), soit en « dépression », donc sous une pression inférieure à la pression ambiante (donc < 10⁵Pa). Le vide d'air partiel correspondra alors à une pression interne souvent comprise entre 10⁻² et 10⁴ Pa. La structure comprendra une enveloppe étanche contenant au moins un matériau isolant thermique a priori poreux voire nano-poreux. Avec un isolant poreux dans une structure PIV, la performance de la gestion thermique à assurer sera encore améliorée, voire le poids d'ensemble diminué par rapport à un autre isolant. Typiquement, les panneaux PIV (panneau isolant sous vide ; VIP en anglais) sont des isolants thermiques où au moins un matériau poreux, par exemple en gel de silice ou poudre d'acide silicique (SiO2), est pressé en plaque et entouré d'une feuille enveloppante par exemple en matière plastique et/ou ou aluminium laminé. « Poreux » désigne un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ouverts ont des tailles inférieures à 1 ou 2mm de façon à pouvoir garantir une bonne isolation thermique, et de préférence à 1 micron, et préférentiellement encore à 1 à 2x10⁻⁸m (structure quasiment nano-poreuse), pour des questions en particulier de tenue au vieillissement et donc de possible dépression moins forte dans l'enveloppe PIV.

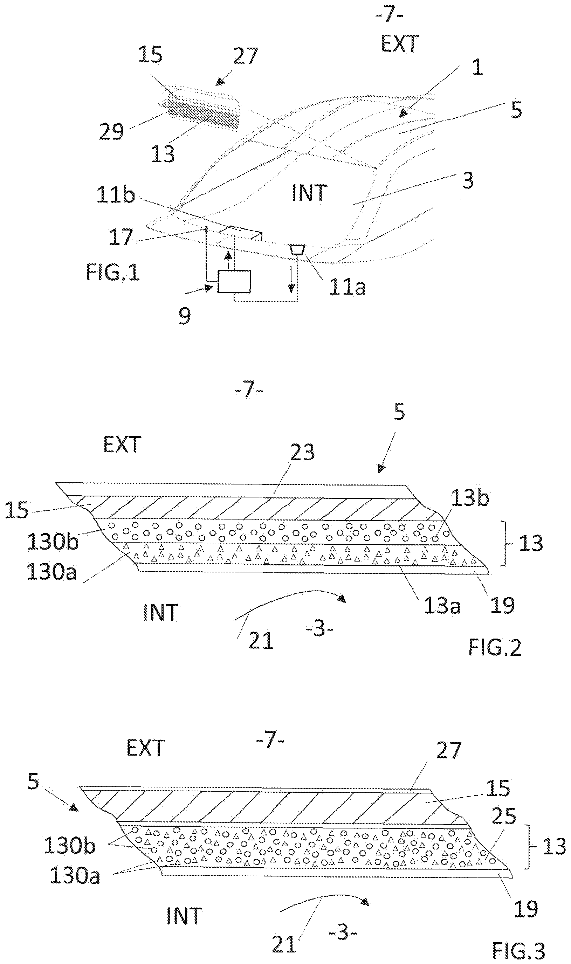

Ceci précisé, la figure 1 schématise donc un véhicule 1 comprenant un habitacle 3 dont une paroi 5 est pourvue d'un dispositif de gestion thermique.

La paroi 5, ici la paroi du pavillon (ou toit), est l'une de celles qui limitent extérieurement l'habitacle. Elle est donc interposée entre l'habitacle 3 intérieur (INT) et un environnement extérieur 7 (EXT).

D'autres parois de limitation extérieure de l'habitacle pourraient être pourvues du dispositif de gestion thermique qui suit : Par exemple une paroi de portière.

Ce qui importe est qu'il s'agisse d'une paroi du véhicule dont la gestion thermique aura une influence sur la température dans l'habitacle 3, comme expliqué ci-après.

Des moyens 9 de conditionnement d'air permettent de conditionner l'air dans l'habitacle, par l'intermédiaire de bouches de prélèvement et d'entrée d'air 11a, 11b.

Ainsi, comme connu en soi sur les véhicules existants, à certains moments de l'air est prélevé, passe dans les moyens 9 de conditionnement d'air pour y être chauffé ou refroidi, puis est projeté dans l'habitacle à une température différente de celle à laquelle il a été prélevé.

Si ceci permet temporairement d'adapter sensiblement au souhait de d'un occupant de l'habitacle la température dans celui-ci quand cet occupant ressent une sensation de froid ou de chaud venu de l'extérieur, un tel conditionnement d'air est un fort consommateur d'énergie et n'est typiquement que temporaire.

Ce caractère temporaire pourra être assuré par une action manuelle ou par exemple par une adaptation automatique via un réglage opéré sur la console des moyens 9 de conditionnement d'air accessible dans l'habitacle et contrôlé par une sonde de température 17.

Aussi, pour améliorer la gestion thermique dans l'habitacle 3, est-il proposé que l'une au moins des parois précitées, la paroi 5 dans l'exemple, soit pourvue, de l'intérieur où est situé l'habitacle, vers l'extérieur :
- d'une barrière thermique intérieure 13 contenant au moins un matériau MCP ayant une température de changement d'états entre liquide et solide comprise entre 15°C et 40°C, et de préférence entre 17°C et 35°C,
- et d'au moins un élément isolant thermique 15.

La conductivité thermique de chaque élément de la barrière thermique 13 sera bien sûr supérieure à celle de tout élément isolant thermique 15.

Cela étant, on pourra trouver avantage à utiliser dans la barrière 13 contenant un matériau MCP au sein d'une matrice poreuse ayant des pores ouverts qui varieront, typiquement en taille ou volume, en fonction de l'état liquide ou solide du matériau MCP, faisant ainsi varier la conductivité thermique. On peut ainsi prévoir d'utiliser une mousse expansive chargée en MCP encapsulé fixé sur le réseau de la mousse, par réticulation ou autrement, par exemple adhésion (collage) ou suspension.

Dans un tel cas, le matériau MCP pourra occuper un volume plus important, à l'état liquide. Les pores de la matrice poreuse sont alors resserrés. Elle contiendra moins d'air. Dans son état solide, le matériau MCP occupera par contre dans ce cas un volume réduit. Les pores de la matrice poreuse sont donc d'un volume plus important. Avec une mousse expansive, ils se seront expansés. La matrice poreuse contiendra plus d'air. La conductivité thermique de la barrière thermique 13 sera alors plus faible.

Parmi les matrices poreuses, et en particulier les mousses à porosité ouverte pouvant être utilisées dans un PIV, on sélectionnera avantageusement celles ayant une bonne résistance à la compression lors de la mise sous vide, soit : sous une différence de pression de 1 bar (10⁵Pa), une déformation inférieure à 3% et de préférence à 2%, sans quoi elles s'affaissent et l'on perd, a priori plus de 10% voire de 20%, en propriétés thermiques (conductivité). Ainsi, si l'on applique une charge de 1 bar sur la surface de l'échantillon (tel un parallélépipède rectangle) pour le comprimer de façon uni-axiale (suivant son épaisseur), une déformation de 2% correspond au rapport : e1 - e2 / e1 x100 ; avec :
e1 : épaisseur initiale de l'échantillon,
e2 : épaisseur finale de l'échantillon sous une pression de 1 bar.

La pression de référence sous laquelle l'échantillon présentera son épaisseur initiale sera typiquement la pression atmosphérique (10⁵Pa), à température ambiante (20°C).

Les mousses de polyuréthane et polystyrène peuvent convenir.

Favorablement, la barrière thermique présentera un rapport de conductivité thermique entre la situation où le(s) matériau(x) MCP est(sont) totalement solide(s) et la situation où le(s) matériau(x) MCP est(sont) totalement liquide(s) compris entre plus de 1 et 3, idéalement plus de 1 et environ 10.

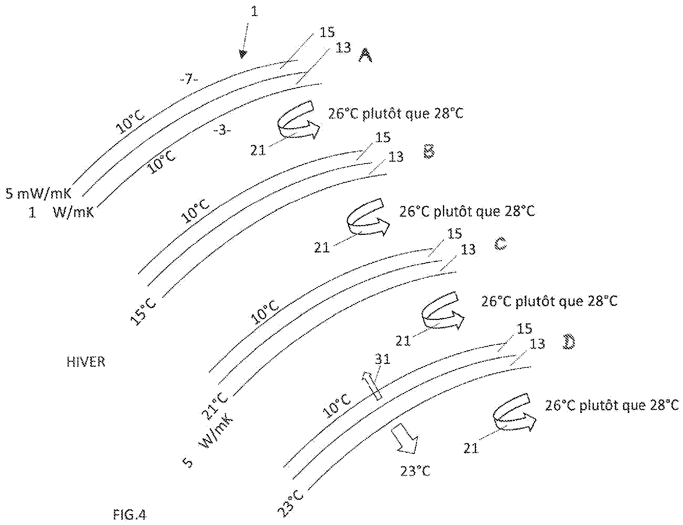

Ainsi les effets expliqués ci-après en référence aux figures 4-5 seront favorisés.

Malgré des environnements extérieurs 7 parfois rudes, soumis à des températures ambiantes non constantes et sévères (jour/nuit, soleil...), l'association de la barrière thermique 13 à matériau(x) MCP et d'au moins un isolant thermique 15 doit permettre de réduire le recours aux moyens 9 de conditionnement d'air et surtout de limiter la consommation d'énergie de ceux-ci.

C'est en ce sens qu'il sera a priori favorable de prévoir:
- que le(chaque) matériau MCP de la barrière 13 stockera de l'énergie thermique en se liquéfiant par échange thermique avec l'air de l'habitacle 3 si cet air s'échauffe jusqu'à plus de 20°C (par exemple car le soleil aura chauffé l'habitacle), après que le véhicule 1 se soit trouvé dans un environnement 3/7 où le(chaque) matériau MCP se sera solidifié, par exemple après une nuit plus fraîche, puis
- si la température de l'habitacle est jugée trop élevée (le soleil continue à chauffer), on fera arriver dans cet habitacle, en échange thermique avec ledit au moins un matériau MCP, de l'air conditionné frais issu de moyens 9 de conditionnement d'air, de sorte que l'air conditionné frais arrivant entraine une solidification dudit au moins un matériau MCP.

On doit ainsi permettre à l'occupant du véhicule d'avoir plus rapidement et/ou de manière plus sensible la sensation du changement de température dans l'habitacle induit par l'air conditionné apporté par les moyens 9 de conditionnement d'air.

On devrait pouvoir d'autant plus favoriser cet effet que la (ou chaque) température de changement d'états du matériau MCP considéré de la barrière 13 sera supérieure ou égale à la plus haute température de refroidissement et d'entrée d'air des moyens 9 de conditionnement d'air dans l'habitacle, quand donc ces moyens 9 soufflent de l'air frais à température inférieure à celle de l'habitacle 3.

En pratique on pourra considérer que cette « température de refroidissement et d'entrée d'air » sera la température d'entrée de l'air dans l'habitacle, en sortie des bouches de projection d'air 11b. La sonde de température 17 reliée aux moyens 9 de conditionnement d'air permettra de relever les températures dans l'habitacle 3.

Typiquement, si la gamme de températures de confort dans l'habitacle 3 pour un occupant de cet habitacle est comprise entre 19°C et 23°C, par exemple 21°C, on pourra prévoir que la plus haute température de refroidissement et d'entrée d'air des moyens 9 de conditionnement soit inférieure à ladite température minimum de confort, et donc typiquement de l'ordre de 16°C à moins de 21°C.

Ceci assurera le rafraîchissement que l'on connaît actuellement dans les véhicules automobiles, quand la fonction de conditionnement d'air frais/froid est activée.

Dans le cas où, plutôt que climatiser en froid, il est nécessaire de climatiser en chaud, par exemple l'hiver, on préfèrera par ailleurs que ladite température de changement d'états soit alors supérieure ou égale à la plus basse température de chauffage et d'entrée d'air de ces mêmes moyens 9 de conditionnement d'air, quand donc ces moyens 9 soufflent de l'air plus chaud à température supérieure à celle de l'habitacle 3, et typiquement supérieure à 21°C dans le cas ci-avant.

Bien qu'illustré uniquement très schématiquement figure 1, le cas d'une barrière 13 avec un seul matériau MCP est très réaliste.

Figures 2,3 on a toutefois schématisé une situation où plusieurs matériaux MCP ayant des températures de changement d'états différentes sont prévus, par exemple pour réagir avec un ajustement optimisé en vue de préserver au mieux l'efficacité de l'élément isolant thermique 15 et les sensations rapides tant de chaud que de froid, lors des phases de conditionnement d'air dans l'habitacle.

Avec deux matériaux MCP, tels 13a,13b, on pourra choisir de comme températures respectives de changement d'états :
- entre 17°C et 25°C, et
- entre 25°C et 40°C,
le tout à 10% près (voir avantages notamment en liaison avec les figures 4-5).

Pour conditionner dans la paroi 5 ce ou ces MCP, on pourra, comme schématisé figure 2, les disposer dans plusieurs couches, tels 130a,130b, de matériaux contenant chacune un tel matériau MCP, les matériaux MCP ayant des températures de changement d'état différentes les unes des autres. La couche à matériau MCP à température de changement d'états plus basse, tel 130a, sera alors favorablement située intérieurement par rapport à la couche à matériau MCP à température de changement d'états plus haute, tel 130b.

Une autre solution est que la barrière thermique intérieure 13 comprenne plusieurs matériaux MCP, tels 13a, 13b, ayant des températures de changement d'état différentes dispersés dans un support 25, comme schématisé figure 3. La dispersion s'opérera de préférence dans une matrice en résine polymère.

Eventuellement (au moins) une couche intermédiaire 19 structurelle et/ou esthétique existera entre la ou les couche(s) à matériau(x) MCP et l'habitacle 3. Dans ce cas la conductivité thermique à travers cette couche 19 sera importante, typiquement supérieure à 25mW/m.K. pourrait s'agir d'une fine couche de tissu de quelques millimètres d'épaisseur.

Comme schématisé figure 2, au moins un autre élément structurel 23 pourra aussi appartenir à la paroi 5, telle une armature qui sera typiquement un élément de la carrosserie du véhicule ou encore un panneau de verre comme on en trouve sur les toits de certains véhicules.

Les éléments 13,15 de gestion thermique seront alors a priori situés intérieurement par rapport à l'élément structurel 23 qu'ils doubleront dans ce cas d'un côté.

Quant à la réalisation de l'élément isolant thermique 15, il est conseillé qu'il soit disposé dans au moins une enveloppe sous vide 27, pour définir au moins un panneau isolant sous vide, PIV, comme schématisé notamment dans l'agrandissement à droite figure 1.

Cette enveloppe sous vide, ou une autre, pourra aussi contenir la barrière thermique 13, pour favoriser une efficacité thermique et une praticité d'emploi.

Chaque enveloppe 27 pourra comprendre une ou plusieurs feuilles déformables 29 (figure 1), telles que des feuilles métalliques (par exemple en aluminium) ou plastiques de quelques dixièmes de mm à quelques mm d'épaisseur, scellées (par exemple soudées) sur toute leur périphérie.

En tant que matériau MCP de la barrière 13 (s'il est seul, ou l'un d'eux sinon), il pourra en particulier s'agir de MCP encapsulé (typiquement de 0.5 à 10 mm de diamètre), de préférence a priori à micro-encapsulés (typiquement de 1 à 10 millièmes de mm de diamètre), dans des capsules déformables, qui peuvent donc être en élastomère (typiquement des sphères) placés favorablement dans une matrice poreuse à pores ouverts s'expanser (se dilater) et se resserrer (diminuer de volume), mousse cellulaire typiquement, comme expliqué ci-avant. On pourra notamment choisir une mousse à base élastomère, notamment de silicone, NBR, HNBR. La matrice poreuse d'enrobage pourra par exemple être sous forme de gel. La mousse absorbera en se déformant les variations de volume des capsules de MCP. La mousse pourra favorablement comprendre des fibres chargées d'éléments thermiquement conducteurs tels qu'en graphite ou en noir de carbone. Les capsules de MCP pourront avoir de un à quelques mm de diamètre (1 à 5mm par exemple). Elles pourront présenter une enveloppe élastomère, de sorte que les capsules soient élastiquement expansibles.

A titre d'exemple de MCP, on pourra utiliser des MCP comme en paraffine pure ou comprenant un liquide eutectique, présentant des changements de phase dans les plages de températures considérées. Ne sont par contre pas ici privilégiés des MCP formulés comme dans EP2690137 ou dans EP2690141, dans la mesure où ces MCP seraient encapsulés dans des microcapsules plastiques.

La charge en capsules pourra représenter jusqu'à 85% du volume mousse + capsules lorsque le MCP est à l'état cristal.

La mousse sera chargée d'absorber la variation de 10% à 15% du volume de la capsule lorsque le MCP sera à l'état liquide.

La charge en capsules pourra représenter jusqu'à 95% du volume mousse + capsules lorsque le MCP est à l'état liquide.

Supposons maintenant que l'on vise efficacement la gestion thermique de l'atmosphère de l'habitacle 3 avec les moyens 9 de conditionnement d'air, et l'élément isolant thermique 15 et une barrière thermique intérieure 13 comme ci-avant, en capacité d'échange thermique avec l'atmosphère de l'habitacle.

Comme température de changement d'états entre liquide et solide du MCP concerné, on pourra avoir choisi une température proche de l'ambiante, comme 19-22°C, 21°C par exemple, ou plutôt une température notablement plus élevée, comme de l'ordre de 30-35°C, 33°C par exemple.

Ainsi, dès que la température influençant la barrière 13 sera inférieure à 21°C ou 33°C, le MCP sera dans l'état solide.

Avec un MCP réticulé, imbriqué dans et avec une matrice poreuse à pores ouverts de tailles/volumes variables, comme une mousse expansive, la solidification (cristallisation) du MCP provoquera sa contraction, et donc une expansion des pores de la matrice laquelle présentera alors une conductivité thermique relativement faible : plus faible que dans l'état liquide du matériau MCP.

Le ressenti de l'occupant à une entrée d'air relativement froid dans l'habitacle, soufflé par les moyens 9 de conditionnement, sera rapide et notable, puisque la température de l'air en circulation dans l'habitacle ne contribuera dans un premier temps qu'à l'abaissement de la température dans ledit habitacle du fait de l'isolation thermique assurée tant par l'isolant 15, qui restera à la température de l'extérieur, que par la barrière 13, qui contribuera à créer une isotherme côté intérieur de la paroi favorable au ressenti rapide d'un confort.

Ainsi, supposons qu'arrêté le véhicule 1 stationne dehors depuis quatre heures sous une température extérieure (EXT) de plus 35°C. Le MCP de la barrière thermique 13 est alors liquéfié. Les deux faces de l'isolant thermique 15 peuvent être à plus de 40°C.

Un occupant entre dans le véhicule. Il a chaud. Il y a un déclenchement temporaire du conditionnement de l'air 9, soit manuellement via l'occupant, soit automatiquement, suite à une détection d'une température inadaptée par la sonde 17 (définition prédéterminée d'une température de seuil et déclenchement automatique programmé des moyens 9 si le seuil est atteint).

Rapidement, les moyens 9 soufflent alors dans l'habitacle de l'air, à 17°C par exemple. Un flux thermique 21 s'établit au contact de la paroi 5.

Dès que la température de l'air de l'habitacle 3 influençant la barrière 13 atteint celle où le MCP passe dans l'état solide, la transmission de ce flux vers l'extérieur est retardée. Ceci sera donc plus rapide si la température de changement d'états est vers 33°C plutôt que vers 21°C.

La température en face interne de la barrière thermique 13 diminue rapidement. L'occupant a rapidement une sensation « de frais », avant même que cela corresponde à la température réelle dans l'habitacle.

Ainsi, on vise à pouvoir gagner 2°C sur la température de soufflage de l'air refroidi dans l'habitacle par rapport à ce qui doit être fait sans barrière et de préférence sans couple élément isolant thermique 15 / barrière thermique intérieure 13, puisque ce couple participe aussi à freiner le flux thermique de l'extérieur (ici à plus 35°C) vers l'intérieur.

Autre cas : Après une nuit fraîche (vers 10°C par exemple), un occupant entre dans le véhicule 1 stationné dehors et non utilisé toute cette nuit. Le conditionnement de l'air y est déclenché. Les moyens 9 soufflent alors de l'air (à 26°C par exemple) plus chaud que la température fraîche dans l'habitacle (vers 10°C dans l'exemple). Tant que le MCP concerné de la barrière 13 reste solide (cristal), doublée pat l'isolant 15, la barrière thermique est la plus isolante possible. La chaleur pulsée par les moyens 9 demeure dans l'habitacle 3. On ralentit la montée en température de la barrière. De nouveau, l'effet est favorable au ressenti de l'occupant qui a ainsi plus rapidement une sensation « de chaud », comparable à celle qu'il aurait si les moyens 9 avaient soufflé dans l'habitacle de l'air à plus haute température, typiquement 28°C. L'effet se prolonge d'autant plus si la température de changement d'états du MCP concerné est vers 33°C plutôt que vers 21°C. Les exemples des figures 4-5 expliquent l'intérêt à ce qu'une température de changement d'états de MCP soit entre 17°C et 25°C.

Dans ce qui précède, on aura noté le rôle de gestionnaire temporel que l'isolant thermique et la barrière thermique peuvent jouer tant dans le ralentissement de la transmission vers l'habitacle d'une chaleur ou d'un froid excessif venant de l'extérieur (EXT) que dans l'action anti-dissipation d'une température jugée adaptée née du soufflage dans l'habitacle d'air issu des moyens 9 de conditionnement d'air.

La combinaison de l'isolant thermique 15 et de la barrière thermique intérieure 13 est donc profitable :
- thermiquement,
- en termes de ressenti de température de la part de l'occupant situé dans l'habitacle, après que les moyens 9 auront commencé à conditionné l'air dans cet habitacle,
- et donc en termes de consommation énergétique de ces moyens 9 qui auront besoin de moins souffler le chaud ou le froid pour un même effet vis-à-vis de l'occupant.

Si l'on s'intéresse maintenant aux cas des figures 4-5, on comprend ce qui suit, étant supposé que la barrière 13, doublée donc extérieurement par l'isolant thermique 15, contienne deux MCP ayant des températures de changements d'états entre liquide et solide respectivement de 21°C et 33°C et qui sont dispersés dans une matrice poreuse à base de mousse élastomère.

Figure 4, situation A : Hiver, par exemple ; le véhicule a séjourné plusieurs heures dehors. A l'extérieur (7) et à l'intérieur de l'habitacle 3, la température est stabilisée à 10°C, dans l'exemple.

A t0, une climatisation à 26°C (flux 21) est soufflée dans l'habitacle. Les deux MCP sont solides. Les pores de la mousse sont ouverts. La conductivité de la mousse est relativement faible (1W/mK dans l'exemple), plus forte toutefois que celle de l'isolant 15 (5mW/mK dans l'exemple).

Il y a peu de transfert thermique vers l'extérieur. La température monte plus rapidement dans l'habitacle que dans une situation sans isolant 15, voire même avec le seul isolant 15.

Situation B, à t0+2-3mn : Idem ci-dessus, à ceci près que la température dans la barrière 13 atteint maintenant 15°C.

Situation C, à t0+3-5mn : La température dans la barrière 13 atteint maintenant 21°C. Le premier MCP commence à se liquéfier. Il emmagasine de la chaleur. Celle-ci sera libérée quand on cessera de souffler de l'air chaud via la climatisation et que la température dans l'habitacle redescendra au moins jusqu'à 21°C.

La liquéfaction du premier MCP a provoqué une hausse de la conductivité thermique de la barrière 13 (2-3W/mK dans l'exemple). Mais, comme noté ci-avant, l'occupant a déjà ressenti une amélioration rapide de son confort, du fait du couple barrière 13 / isolant 15, sans que l'on ait eu besoin de chauffer à 27-28°C. On a pu gagner 1-2°C par rapport à une situation sans le couple précité.

Situation D, à t0+5-7mn : La température dans la barrière 13 atteint maintenant 23°C. Le premier MCP est totalement liquide. Un flux thermique relativement faible traverse l'isolant thermique 15 vers l'extérieur. Mais l'essentiel du flux chaud 21 apporté par l'air climatisé demeure dans l'habitacle, d'autant que le second MCP est toujours solide.

On peut prévoir que quand la température dans l'habitacle atteint 23°C, la sonde 17 (figure 1) coupe la climatisation.

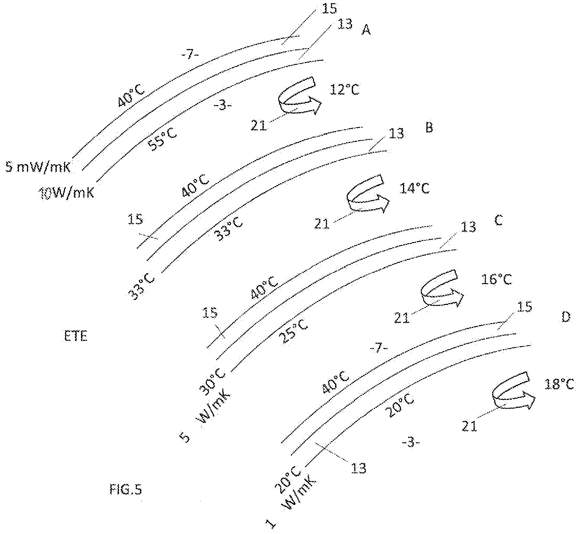

Figure 5, situation A : Eté par exemple ; le véhicule a séjourné plusieurs heures dehors. A l'extérieur (7) la température est à 40°C et à l'intérieur de l'habitacle 3 plus chaude, 55°C dans l'exemple.

A t0, une climatisation la plus froide possible, ici à 12°C (flux 21), est soufflée dans l'habitacle. Les pores de la mousse sont resserrés. La conductivité de la mousse est relativement forte, plus forte bien sûr que celle de l'isolant 15. On peut actuellement alors prévoir pour la mousse une conductivité (À = 2-5W/mK par exemple), multipliée entre 2 et 3 fois par rapport à ce qu'elle est quand les pores de cette mousse sont dilatés.

Du fait du relativement fort transfert thermique dans la barrière 13, celle-ci se refroidit plus rapidement que sans le couple barrière 13 / isolant 15.

Situation B, à t0+2-3mn : La température dans la barrière 13 atteint maintenant 33°C ; idem dans l'habitacle. La température y est plus supportable. On peut réduire l'énergie froide soufflée : La température du flux 21 soufflé peut remonter, ici de 2°C, à 14°C.

Le second MCP commence à se solidifier. Le « froid stocké » pourra retarder la remontée ultérieure de température dans l'habitacle, au soleil, par exemple lors d'un parking court. Cette cristallisation décale dans le temps le refroidissement de l'isolant 15.

Situation C, à t0+3-5mn : La température dans la barrière 13 atteint maintenant 30°C. Le second MCP est solide. La climatisation dans l'habitacle, qui est maintenant à 25°C, est encore réduite ; la température du flux 21 soufflé peut remonter, ici encore de 2°C, à 16°C. Il y a une baisse de la conductivité de la mousse (valeur intermédiaire dans la plage de conductivité : 1-1.5W/mK par exemple, puisque seul un des MCP est devenu solide).

Situation D, à t0+5-7mn : La température dans la barrière 13 atteint maintenant 20°C. Elle est stabilisée avec celle dans l'habitacle.

Avant d'être interrompue, la climatisation dans l'habitacle est de nouveau réduite; la température du flux 21 soufflé remonte à 18°C, quasiment la température dans l'habitacle. Il y a une nouvelle baisse de la conductivité de la mousse (valeur intermédiaire dans la plage de conductivité : 0.5W/mK par exemple, puisque tous les MCP sont devenus solides). Le frais du flux 21 soufflé agit au maximum.

Les exemples des figures 4-5 montrent donc qu'avec l'invention, on y gagne par rapport à des situations sans isolant 15 et/ou sans couple barrière 13 / isolant 15, sur certains au moins des aspects suivants: énergie consommée, temps de ressenti d'une situation de confort dans l'habitacle, préservation allongée de l'effet de la climatisation dans l'habitacle après arrêt de celle-ci, dans les mêmes conditions extérieures, sensation accrue de confort dans l'habitacle quand une climatisation (chaude ou froide) y est déclenchée.

On notera encore que tout MCP peut avoir un changement de phase ou d'état à un pic de température prédéterminé ou qui s'établit sur une plage de températures plus ou moins large. Ainsi, avec un MCP pur (tel qu'une paraffine) la température de changement d'état sera constante, tandis qu'elle pourra être non constante avec plusieurs MCP, tels que pour un mélange de paraffines.

De façon générale, les deux cas pouvant être rencontrés dans la présente demande en liaison avec le(s) MCP prévus, toute température de changement d'état de MCP sera ici à considérer dans une plage de 10°C, et typiquement à +/- 5°C.

## Revendications

1. Véhicule comprenant un habitacle (3) limité par des parois (5) interposées entre l'habitacle et un environnement extérieur, l'une au moins desdites parois étant pourvue :
- d'une barrière thermique intérieure (13) à matrice poreuse et contenant au moins un matériau MCP - matériau à changement de phase - pouvant occuper des états respectivement liquide et solide, ayant une température de changement d'états entre liquide et solide comprise entre 15°C et 40°C, et de préférence entre 17°C et 35°C, et
- d'au moins un élément isolant thermique (15),
**caractérisé en ce que** :
- de l'intérieur où est situé l'habitacle, vers l'extérieur (7), le véhicule comprend la barrière thermique intérieure (13) puis ledit au moins un élément isolant thermique (15), et
- le véhicule comprend en outre des moyens (9) de conditionnement d'air dans l'habitacle, adaptés à chauffer, refroidir et projeter de l'air, pour y placer de l'air au moins en partie issu desdits moyens (9) de conditionnement d'air en échange thermique avec ledit au moins un matériau MCP, et la matrice poreuse de la barrière thermique intérieure (13) est à pores ouverts qui varient en fonction de l'état liquide ou solide du matériau MCP, faisant ainsi varier la conductivité thermique.

2. Véhicule selon la revendication 1, où la matrice poreuse comprend une mousse expansive chargée avec ledit au moins un matériau MCP et absorbant, en se déformant, des variations de volume du matériau MCP liées à son état liquide ou solide.

3. Véhicule selon la revendication 2, où la matrice poreuse comprend une dite mousse expansive à base élastomère.

4. Véhicule selon l'une des revendications précédentes, où la barrière thermique intérieure (13) présente un rapport de conductivité thermique entre la situation où le(s) matériau(x) MCP est(sont) totalement solide(s) et la situation où le(s) matériau(x) MCP est(sont) totalement liquide(s) compris entre plus de 1 et environ 10.

5. Véhicule selon l'une des revendications précédentes, où la barrière thermique intérieure (13) comprend plusieurs dits matériaux MCP ayant des températures de changement d'états différentes.

6. Véhicule selon l'une des revendications précédentes, où l'élément isolant thermique (15) est disposé dans une enveloppe sous vide (27), pour définir au moins un panneau isolant sous vide, PIV.

7. Véhicule selon l'une des revendications précédentes, où la température de changement d'états dudit au moins un matériau MCP est supérieure ou égale à la plus haute température de refroidissement et d'entrée d'air dans l'habitacle des moyens (9) de conditionnement d'air.

8. Véhicule selon l'une des revendications précédentes, où la température de changement d'états dudit au moins un matériau MCP est supérieure ou égale à la plus basse température de chauffage et d'entrée d'air dans l'habitacle des moyens (9) de conditionnement d'air.

9. Véhicule selon l'une des revendications précédentes, où la barrière thermique intérieure (13) comprend plusieurs dits matériaux MCP ayant des températures de changement d'état différentes dispersés dans un support.

10. Véhicule selon la revendication 5 seule ou en combinaison avec l'une des revendications 6 à 8, ou selon la revendication 9, où les matériaux MCP de la barrière thermique intérieure (13) comprennent au moins :
- un premier matériau MCP ayant une température de changement d'état comprise entre 17°C et 25°C, et
- un second matériau MCP ayant une température de changement d'état comprise entre 25°C et 40°C.

11. Véhicule selon la revendication 2 seule ou en combinaison avec l'une des revendications 3 à 10, où ledit au moins un matériau MCP de la barrière thermique intérieure (13) est encapsulé et définit une charge volumique pouvant atteindre :
- 85% du volume de la mousse et desdites capsules, lorsque le matériau MCP est à l'état solide, cristallisé,
- et/ou 95% du volume de la mousse et des capsules lorsque le MCP est à l'état liquide.

12. Véhicule selon l'une des revendications précédentes, où la matrice poreuse présente, sous une différence de pression de 10⁵Pa, une déformation inférieure à 3%.

13. Procédé de gestion thermique de l'atmosphère d'un habitacle (3) de véhicule limité par des parois (5) interposées entre l'habitacle et un environnement extérieur (7), dans lequel procédé:
- on pourvoit une partie au moins des parois (5):
-- d'une barrière thermique intérieure (13) contenant, dans une matrice poreuse, au moins un matériau MCP en échange thermique avec l'air de l'habitacle et ayant une température de changement d'états entre liquide et solide comprise entre 15°C et 40°C, et de préférence entre 17°C et 35°C,
-- et d'au moins un élément isolant thermique (15),
- le véhicule étant placé dans un environnement où le matériau MCP est dans l'état solide, et l'air de l'habitacle (3) s'échauffant jusqu'à plus de 20°C, on laisse ledit au moins un matériau MCP stocker de l'énergie thermique en se liquéfiant par échange thermique avec cet air,
**caractérisé en ce que** :
- de l'intérieur où est situé l'habitacle, vers l'extérieur (7), le véhicule comprend la barrière thermique intérieure (13) puis ledit au moins un élément isolant thermique (15),
- si la température de l'habitacle est jugée trop élevée, on fait arriver dans l'habitacle, en échange thermique avec ledit au moins un matériau MCP, de l'air conditionné frais issu de moyens (9) de conditionnement d'air, de sorte que l'air conditionné frais arrivant entraine une solidification dudit au moins un matériau MCP, et
- on utilise comme barrière thermique intérieure (13) un élément où la matrice poreuse est à pores ouverts, de sorte que ladite solidification entraine une diminution de la conductivité thermique dudit élément.

## Patentansprüche

1. Fahrzeug mit einem Fahrgastraum (3), der von zwischen dem Fahrgastraum und einer äußeren Umgebung angeordneten Wänden (5) eingegrenzt ist, wobei zumindest eine dieser Wände versehen ist mit:
- einer inneren Wärmesperre (13), die eine poröse Matrix aufweist und zumindest ein PCM-Material, Phasenwechselmaterial, enthält, das einen flüssigen bzw. festen Zustand annehmen kann und eine Temperatur der Zustandsänderung zwischen flüssig und fest aufweist, die zwischen 15°C und 40°C, vorzugsweise zwischen 17°C und 35°C, liegt, und
- zumindest einem wärmeisolierenden Element (15),
**dadurch gekennzeichnet, dass**
- das Fahrzeug vom Inneren, wo sich der Fahrgastraum befindet, zum Äußeren (7) hin die innere Wärmesperre (13) und dann das zumindest eine wärmeisolierende Element (15) enthält, und
- das Fahrzeug ferner Mittel (9) zur Klimatisierung von Luft im Fahrgastraum enthält, die dazu geeignet sind, Luft zu erwärmen, abzukühlen und auszustoßen, um darin Luft, die zumindest teilweise von den Klimatisierungsmitteln (9) stammt, in Wärmeaustausch mit dem zumindest einen PCM-Material zu bringen, und die poröse Matrix der inneren Wärmebarriere (13) mit offenen Poren ausgebildet ist, die je nach flüssigem oder festem Zustand des PCM-Materials variieren, wodurch die Wärmeleitfähigkeit variiert wird.

2. Fahrzeug nach Anspruch 1,
wobei die poröse Matrix einen expandierenden Schaum enthält, der mit dem zumindest einen PCM-Material gefüllt ist und Volumenschwankungen des PCM-Materials, die mit seinem flüssigen oder festen Zustand zusammenhängen, unter Verformung aufnimmt.

3. Fahrzeug nach Anspruch 2,
wobei die poröse Matrix einen expandierenden Schaum auf Elastomerbasis enthält.

4. Fahrzeug einem der vorangehenden Ansprüche,
wobei die innere Wärmesperre (13) zwischen der Situation, in der das bzw. die PCM-Materialien vollständig fest ist bzw. sind, und der Situation, in der das bzw. die PCM-Materialien vollständig flüssig ist bzw. sind, ein Wärmeleitfähigkeitsverhältnis zwischen mehr als 1 und etwa 10 aufweist.

5. Fahrzeug nach einem der vorangehenden Ansprüche,
wobei die innere Wärmesperre (13) mehrere PCM-Materialien mit unterschiedlichen Zustandsänderungstemperaturen enthält.

6. Fahrzeug nach einem der vorangehenden Ansprüche,
wobei das wärmeisolierende Element (15) in einer Vakuumhülle (27) angeordnet ist, um zumindest ein Vakuum-Isolations-Paneel, PIV, zu definieren.

7. Fahrzeug nach einem der vorangehenden Ansprüche,
wobei die Zustandsänderungstemperatur des zumindest einen PCM-Materials größer oder gleich der höchsten Temperatur der Luftklimatisierungsmittel (9) beim Abkühlen und Einlassen von Luft in den Fahrgastraum ist.

8. Fahrzeug nach einem der vorangehenden Ansprüche,
wobei die Zustandsänderungstemperatur des zumindest einen PCM-Materials größer oder gleich der niedrigsten Temperatur der Luftklimatisierungsmittel (9) beim Erwärmen und Einlassen von Luft in den Fahrgastraum ist.

9. Fahrzeug nach einem der vorangehenden Ansprüche,
wobei die innere Wärmesperre (13) mehrere PCM-Materialien mit unterschiedlichen Zustandsänderungstemperaturen enthält, die in einem Träger dispergiert sind.

10. Fahrzeug nach Anspruch 5 allein oder in Kombination mit einem der Ansprüche 6 bis 8 oder nach Anspruch 9,
wobei die PCM-Materialien der inneren Wärmesperre (13) zumindest enthalten:
- ein erstes PCM-Material mit einer Zustandsänderungstemperatur zwischen 17°C bis 25°C, und
- ein zweites PCM-Material mit einer Zustandsänderungstemperatur zwischen 25°C und 40°C.

11. Fahrzeug nach Anspruch 2 allein oder in Kombination mit einem der Ansprüche 3 bis 10,
wobei das zumindest eine PCM-Material der inneren Wärmesperre (13) eingekapselt ist und eine Volumenladung definiert, die
- 85% des Volumens des Schaums und der Kapseln erreichen kann, wenn sich das PCM-Material in einem festen, kristallisierten Zustand befindet,
- und/oder 95% des Volumens des Schaums und der Kapseln erreichen kann, wenn sich das PCM in flüssigem Zustand befindet.

12. Fahrzeug nach einem der vorangehenden Ansprüche,
wobei die poröse Matrix bei einer Druckdifferenz von 10⁵ Pa eine Verformung von weniger als 3% aufweist.

13. Verfahren zum Wärmemanagement der Atmosphäre eines Fahrzeug-Fahrgastraums (3), der von zwischen dem Fahrgastraum und einer äußeren Umgebung (7) angeordneten Wänden (5) eingegrenzt ist, bei welchem Verfahren:
- zumindest ein Teil der Wände (5) versehen wird mit:
-- einer innere Wärmesperre (13), die in einer porösen Matrix zumindest ein PCM-Material in Wärmeaustausch mit der Luft des Fahrgastraums enthält und eine Temperatur der Zustandsänderung zwischen flüssig und fest zwischen 15°C und 40°C, und vorzugsweise zwischen 17°C und 35°C, aufweist,
-- und zumindest einem wärmeisolierenden Element (15),
- wobei das Fahrzeug in eine Umgebung gebracht wird, in der sich das PCM-Material im festen Zustand befindet und sich die Luft des Fahrgastraums (3) auf mehr als 20°C erwärmt, wobei in das zumindest eine PCM-Material thermische Energie gespeichert wird, indem es sich durch Wärmeaustausch mit dieser Luft verflüssigt,
**dadurch gekennzeichnet, dass**:
- das Fahrzeug vom Inneren, wo sich der Fahrgastraum befindet, zum Äußeren (7) hin die innere Wärmesperre (13) und dann das zumindest eine wärmeisolierende Element (15) enthält,
- dann, wenn die Temperatur des Fahrgastraums als zu hoch erachtet wird, klimatisierte Frischluft von Klimatisierungsmitteln (9) in den Fahrgastraum in Wärmeaustausch mit dem zumindest einen PCM-Material eingebracht wird, so dass die einströmende klimatisierte Frischluft eine Verfestigung des zumindest einen PCM-Materials bewirkt,
- als innere Wärmesperre (13) ein Element verwendet wird, bei dem die poröse Matrix offenporig ausgebildet ist, so dass die Verfestigung eine Verminderung der Wärmeleitfähigkeit des Elements bewirkt.

## Claims

1. Vehicle comprising a passenger compartment (3) limited by walls (5) interposed between the passenger compartment and an outside environment, wherein at least one of said walls is provided with:
- an inside thermal barrier (13) having a porous matrix and containing at least one PCM material - phase-change material - capable of adopting liquid and solid states respectively, having a temperature of change of state between liquid and solid comprised between 15°C and 40°C and preferably between 17°C and 35°C, and
- at least one thermally insulating element (15),
**characterised in that**:
- from the inside where the passenger compartment is situated, towards the outside (7), the vehicle comprises the inside thermal barrier (13) and then said at least one thermally insulating element (15), and
- the vehicle furthermore comprises means (9) for conditioning air in the passenger compartment, suitable for heating, cooling and propelling air, in order to place in the latter air derived at least in part from said air conditioning means (9) in thermal exchange with said at least one PCM material and the porous matrix of the inside thermal barrier (13) has open pores that vary according to the liquid or solid state of the PCM material, thus varying the thermal conductivity.

2. Vehicle according to claim 1, wherein the porous matrix comprises an expanding foam loaded with said at least one PCM material and absorbing, by deforming in size and volume said open pores, variations in volume of the PCM material related to its liquid or solid state.

3. Vehicle according to claim 2, wherein the porous matrix comprises a said expanding foam which is based on an elastomer.

4. Vehicle according to any of the preceding claims, wherein the thermal barrier (13) has a thermal conductivity ratio between a state in which the PCM material(s) is/are totally solid and a state in which the PCM material(s) is/are totally liquid of between more than 1 and approximately 10.

5. Vehicle according to any of the preceding claims, wherein the thermal barrier (13) comprises several said PCM materials having different temperature of change of state.

6. Vehicle according to any of the preceding claims, wherein the thermally insulating element (15) is arranged in a vacuum enclosure (27) in order to define at least one vacuum insulated panel, VIP.

7. Vehicle according to any of the preceding claims, wherein the change of state temperature of said at least one PCM material is greater than or equal to the highest air cooling temperature supplied into the passenger compartment by the air conditioning means (9).

8. Vehicle according to any of the preceding claims, wherein the change of state temperature of said at least one PCM material is greater than or equal to the lowest air heating temperature supplied into the passenger compartment by the air conditioning means (9).

9. Vehicle according to any of the preceding claims, wherein the thermal barrier (13) comprises several said PCM materials having different temperature of change of state dispersed in a medium.

10. Vehicle according to claim 5 alone or in combination with any of claims 6 to 8, or according to claim 9, wherein the PCM materials of the internal thermal barrier (13) comprise at least:
- a first PCM material having a change of state temperature of between 17°C and 25°C, and
- a second PCM material having a change of state temperature of between 25°C and 40°C.

11. Vehicle according to claim 2 alone or in combination with any of claims 3 to 10, wherein said at least one PCM material of the internal thermal barrier (13) is encapsulated and defines a volume load of up to:
- 85% of the volume of the foam and of said capsules, when the PCM material is crystallised, in the solid state,
- and/or 95% of the volume of the foam and of the capsules when the PCM is in the liquid state.

12. Vehicle according to any of the preceding claims, wherein the porous matrix displays, under a pressure difference of 10⁵Pa, a deformation of less than 3%.

13. Method of thermal management of the atmosphere in a vehicle passenger compartment (3) limited by walls (5) interposed between the passenger compartment and an outside environment (7), in which method:
- at least part of the walls (5) is provided with:
-- an inside thermal barrier (13) containing, in a porous matrix, at least one PCM material in thermal exchange with the passenger compartment air having a temperature of change of state between liquid and solid between 15°C and 40°C and preferably between 17°C and 35°C,
-- and at least one thermally insulating element (15).
- the vehicle being placed in an environment in which the PCM material is in a solid state, and the air in the passenger compartment (3) having a temperature which increases up to more than 20°C, the said at least one PCM material is allowed to store thermal energy by liquefying through heat exchange with said air,
**characterized in that**:
- from the inside where the passenger compartment is situated, towards the outside (7), the vehicle comprises the inside thermal barrier (13) and then said at least one thermally insulating element (15),
- if the temperature in the passenger compartment is deemed too high, fresh conditioned air derived from air conditioning means (9) is introduced into the passenger compartment, in thermal exchange with said at least one PCM material, so that the introduced fresh conditioned air causes solidification of said at least one PCM material, and
- an element is used as an internal thermal barrier (13), in which the porous matrix is an opened-pore matrix, so that said solidification causes a decrease in the thermal conductivity of said element.
